# EUROPEAN PATENT SPECIFICATION

(11) **EP 2 527 172 B1**
(45) Date of publication and mention of the grant of the patent: **31.12.2014**
(21) Application number: 11004330.4
(22) Date of filing: 26.05.2011
(51) Int. Cl.: B60H 1/00, B60H 1/24

(54) **Agricultural vehicle**
Landwirtschaftsfahrzeug
Véhicule agricole

(43) Date of publication of application: 28.11.2012
(73) Proprietor: CLAAS Tractor S.A.S., 78141 Vélizy-Villacoublay Cedex (FR)
(72) Inventor: Hautefeuille, Nicolas, 92140 Clamart (FR); Rondeau, Denis, 92360 Meudon-la-Foret (FR)
(74) Representative: Heuer, Wilhelm

(56) References cited:
- WO-A2-2010/039758
- DE-A1- 4 106 999
- DE-A1-102005 010 179
- FR-A1- 2 878 193
- US-A1- 2008 032 619
- US-A1- 2010 216 384

## Description

The present invention relates to an agricultural vehicle having a driver cabin and means for supplying fresh air to the driver cabin.

When an agricultural vehicle is working on a field the air around the vehicle can be heavily laden with dust, exhaust fumes, or vapours of liquids that are being deployed on the field. When substantial amounts of these substances are allowed to enter the driver cabin, they are likely to cause serious discomfort to the driver, or they may even constitute a health hazard.

A known approach to prevent the ingress of pollutants into the driver cabin is to provide means, such as an air conditioner, for continuously blowing filtered, pollutant-free fresh air into the driver cabin, and to make the cabin substantially air-tight, with only narrow air escape paths remaining between the cabin and the outside, so that the air flow from inside to outside along these paths is strong enough to reliable prevent pollutants from reaching the cabin by that way.

This approach, however, has a problem in that if the remaining escape path is too narrow, the flow of fresh air through the cabin may become insufficient. Of course, the flow of fresh air might be increased by increasing the operating power of the fresh air supply means, but this will consume a substantial amount of fuel, and increase the noise level in the driver cabin. Further, if the flow of fresh air is too powerful, it may become impossible to close the door of the driver cabin while the fresh air supply means is operating.

In order to enable a sufficient flow of fresh air through the driver cabin without substantially increasing the pressure in it, it has been proposed to provide a check valve in a wall of the cabin, the check valve comprising a flexible rubber flap which is easily displaced form its seat by a positive pressure at a side of the flap facing the seat and the cabin, whereas a positive pressure, e.g. due to wind, at an outer side of the flap will press it against the seat, so that outside air is prevented from reaching the cabin.

It was found, however, that the reliability of this solution leaves to be desired. Due to the flexibility of the flap, air can pass through the check valve if a only a small portion of the flap is displaced from its seat, and small forces are sufficient to produce such a displacement. Therefore, only very small positive pressure is maintained inside the cabin, and moderate outside wind may be sufficient to press outside air through the check valve. Further, flexibility of the flap tends to decrease with age, so that after a prolonged time of use, there is a risk that the check valve will be slightly bent in its rest position and does not reliably close off the exhaust air path any more.

WO 2010/039758 A1 discloses a pressure relief valve for the venting of air pressure out of a passenger compartment of a motor vehicle. A flap of this prior art valve comprises an elastomeric material moulded around a rigid insert made of sheet metal and is connected to a valve housing in a hinged configuration. The flap is urged towards the closed condition by a magnet.

DE 10 2005 010 179 A1 discloses a lift truck in which a pressure relief valve is provided in a front panel of a driver cabin, underneath a front window. The valve has a flap comprising a magnetic film and a reinforcing frame to which the film is attached.

FR 2 878 193 A describes a motor vehicle in which a spoiler is mounted on the car top and an exhaust air path for discharging air from the passenger compartment of a motor vehicle comprises a check valve inside the spoiler.

US 2008/0032619 A1 discloses an off-highway vehicle having an in-roof air conditioning system.

The object of the invention is to provide an agricultural vehicle having an improved venting system.

The object is achieved by an agricultural vehicle as defined in claim 1. Since the closing member of the check valve is a rigid plate, it will not flex in operation, the plate will be either at rest in contact with its seat along its entire circomference, thus sealing the exhaust air path completely, or it will be raised from the seat in its entirety, which will not happen unless the entire force that urges the plate against its seat is overcome. Therefore, there is no risk of the check valve not being completely closed if the positive pressure inside the cabin is not high enough to reliably prevent the inflow of ambient air through the exhaust air path.

Since the plate is displaceable from its seat in a substantially upward direction, at least part of the force that urges the plate against its seat will be due to the weight of the plate, which, unlike the flexibility of the conventional rubber flap, will never change, so that there is no risk of the check valve becoming unreliable with time.

Moreover, there is substantially no risk of the check valve opening due to vibrations of the driver cabin, since, in order to raise the plate from its seat, the vibration would have to produce a peak acceleration larger than g, a situation which can easily be prevented by the use of appropriate shock absorbers.

A force urging the plate against its seat should preferably be at least 4 mN/cm² of active plate surface, in order to ensure that the check valve will open only when the positive pressure inside the cabin is high enough to reliably keep out outside air. On the other hand, the force should preferably not exceed 10 mN/cm², since the higher the positive pressure needed to open the valve, the higher is the power required for feeding a sufficient amount of fresh air into the driver cabin.

According to an embodiment preferred for its simplicity, the plate is urged against its seat exclusively by its own weight. When there are no resilient members used, no change in the closing force of the plate is to be expected due to material aging.

As an alternative, a magnet might be provided for urging the plate against its seat. Since the attractive force of a magnet decreases strongly with the distance, such a magnet may hold the check valve tightly closed, so that in the closed position a reliable sealing effect can be achieved, whereas, once the valve is open, a small positive pressure may be sufficient to keep it open, so that only a small amount of power is required for supplying fresh air to the driver cabin.

In order for the plate to be displaceable in a substantially upward direction, the valve seat should be more or less horizontal.

Preferably, the projecting portion of the roof may extend above a windshield of the driver cabin, in order to shade the windshield and the driver behind from the sun.

A downstream portion of the exhaust air path comprising the check valve should preferably be accessible for removal from outside the cabin, so that the check valve may easily be accessed and cleaned in case that dust or debris accumulated on the valve seat should prevent a complete closure of the valve.

In order to be easily accessible, the check valve should preferably form an inlet opening of said downstream portion.

The plate of the check valve may be pivotably mounted. If it is, it will deflect the air passing through the check valve away from the pivoting axis. Accordingly, if the pivoting axis of the plate and an outlet opening are provided at opposite ends of the downstream portion, air flow through the downstream portion is facilitated.

Further features and advantages of the invention will become apparent from the subsequent description of embodiments thereof referring to the appended drawings.
- Fig. 1: is an overall view of an agricultural vehicle according to the present invention; and
- Fig. 2: is a schematic cross section of the front region of the roof of a driver cabin of the vehicle.

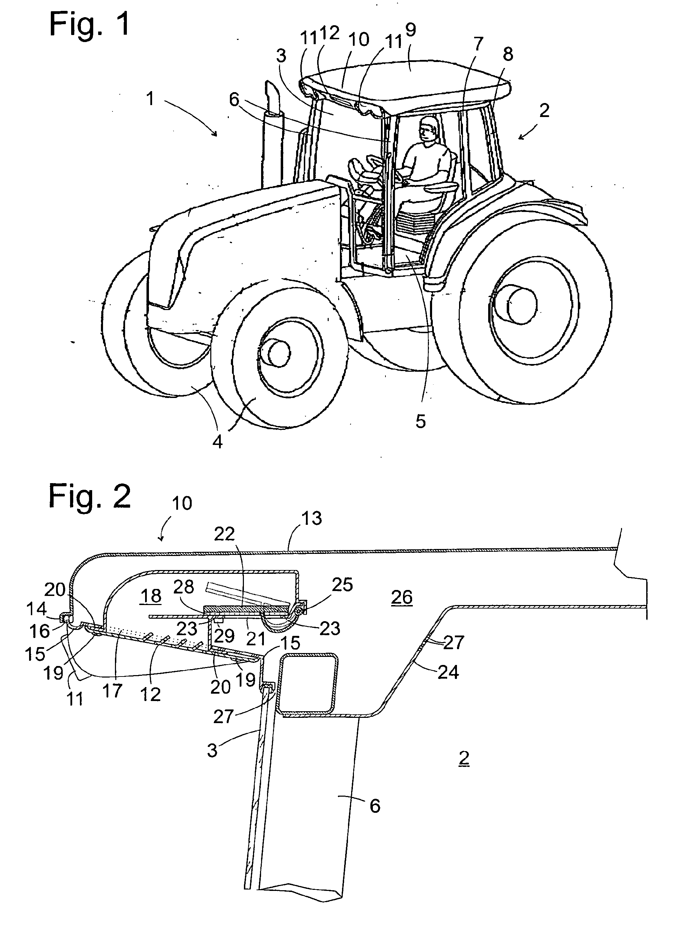

The vehicle shown in Fig. 1 is a tractor, but it will be really apparent to a skilled person that the essential ideas of the invention are really applicable to any kind of agricultural vehicle, such as combine harvesters, forage harvesters and the like.

The tractor 1 of Fig. 1 has a driver cabin 2, the front side of which is almost entirely made up of a windshield 3, so as to offer the driver an unimpeded view of a field in front of the vehicle up to and including its front wheels 4. A door 5 of the driver cabin 2 is also almost entirely made up by a glass pane. Slender columns 6 between the windshield 3 and left and right doors 5 and 7 between the doors 5 and lateral windows 8 support a roof 9 of the cabin 2. The roof 9 protrudes slightly beyond the upper edges of the windshield 3, the doors 4 and the lateral windows 8, in order to provide protection from the sun and to prevent excessive heating of the driver cabin 2.

The temperature in the driver cabin 2 is controlled and fresh, filtered air is supplied by a conventional air conditioning system, not shown.

In a front region 10 of the roof 9 protruding beyond the windshield 3, between headlights 11, there is shown a grid 12 which is the outlet opening of an exhaust air path by which used air escapes from the driver cabin 2.

Fig. 2 is a schematic cross section of this front region 10 and of said exhaust air path. The roof 9 comprises an outer shell 13, which may be deep drawn in one piece from sheet metal or plastic. The outer shell 13 forms the entire top side of the roof 9 and extends to its very forward edge 14. At this forward edge 14, it is connected to a lower shell 15 by an air-tight sealing strip 16. The lower shell 15 forms the underside of protruding front region 10, and extends from forward edge 14 to an upper edge of windshield 3. Between this upper edge and the lower shell 15, another air-tight sealing strip 16 is provided. Upper shell 13, lower shell 15, doors and windows form an enclosure of the driver cabin 2 which is practically air-tight except for a cutout 17 which is formed in lower shell 15 behind the grid 12. The grid 12 is removably fixed to the lower shell 15 by means of screws 19. Between the edges of the grid 12 and the lower shell 15 is held a flange 20 of an air duct 18 extending through cutout 17 into a cavity 26 delimited by upper and lower shells 13, 15 and a cabin roof liner 24. The air duct 18 has two downward facing openings, an outlet opening surrounded by flange 20 and covered by grid 12, and in inlet opening 21 in a rear portion of the air duct 18. Horizontal edges of the inlet opening 21 form a valve seat 23 of a check valve, the displaceable member of which is constituted by a rigid plate 22 which is resting on said horizontal edges inside air duct 18. The check valve allows air to flow from the cabin 2 into the open, but will block any air flow from the open to the cabin 2. The plate 22 is connected to a hinge extending along the rear edge of the air duct 18 by a curved arm, enabling rotation of the plate 22 around a pivoting axis 25 perpendicular to the section plane of Fig. 2. The weight of the plate 22 is between 0.4 and 1 g, preferably approximately 0.5 g, per square centimeter of cross section area of inlet opening 21, so that if the air pressure at the bottom side of plate 22 exceeds the atmospheric pressure inside air duct 18 by at least 40 Pa, the plate 22 is raised from its seat 23, as shown by a dotted outline in Fig. 2, and air will flow from inside driver cabin 2 through air duct 18 and escape into the open through grid 12.

From inside the driver cabin 2, the inlet opening 21 is not visible, but is hidden behind roof liner 24. This does not affect the effectiveness of the check valve at inlet opening 21, since air from within cabin 2 can freely reach the cavity 26 between roof liner 24 and upper shell 13 through openings formed in the roof liner or through crevices 27 that happen to exist between elements of the roof liner 24 or between the roof liner 24 and other structural elements of the cabin 2, such as the roof-supporting columns 6, 7, windshield 3, etc.

A soft cushion layer 28 may be provided at a bottom side of plate 22 or on the edges of inlet opening 21, in order to enable a sealing contact between plate 22 and the edges in case that both are not perfectly flat or that dust particles are caught between the plate 22 and its seat.

If the amount of dust trapped at the valve seat is excessive, the sealing effect may be deteriorated. If the user notices this, he can easily unscrew the grid 12 and remove air duct 18 through cutout 17. Thus the inlet opening 21 becomes freely accessible, and the plate 22 and its seat 23 can easily be cleaned by blowing against it or wiping with a cloth. Since the inlet side of the air duct 18 does not interface with any passage in the roof liner 24, re-installation of the air duct 18 is easy.

In the embodiment of Fig. 2, the plate 22 is urged against its seat 23 exclusively by its own weight, the seat 23 is horizontal, and, at least in an initial phase of its opening movement, the plate 22 is displaced vertically, so that the entire weight of the plate 22 is effective to press it against its seat 23. The direction of displacement of the plate 22 may deviate slightly from the vertical, but the deviation should preferably not exceed approx. 20°, since the force which urges the plate against its seat is proportional to the cosine of this angle, whereas the effects of horizontal oscillations of the driver cabin increase in proportion to the sine of the angle, so that if the direction of displacement of the plate deviates too strongly from the vertical, a pitching oscillation of the driver cabin might cause the check valve to come open even when the pressure in the driver cabin 2 is insufficient to reliably prevent ambient air from entering the cabin through the air duct 18.

In an alternative embodiment, the plate 22 or at least a part of it is made from a ferromagnetic material, and a small magnet 29 attracting the plate 22 to its seat 23 is mounted on the wall of air duct 18 next to the inlet opening 21. The magnet 29 may substantially increase the force which urges the plate 22 against its seat 23 in its closed position, so that a positive pressure inside the driver cabin in excess of 50 Pa may be necessary to raise the plate 22. Once the plate 22 is raised from its seat 23, the attraction by the magnet 29 decreases quickly with the distance, so that when fresh air is continuously fed into the driver cabin 2 and a current of air escaping from the driver cabin continuously holds the plate 22 in its open position, the positive pressure maintained inside the driver cabin 2 is governed almost exclusively by weight of plate 22.

### Reference Numerals

- 1: tractor
- 2: driver cabin
- 3: windshield
- 4: front wheels
- 5: door
- 6: column
- 7: column
- 8: lateral window
- 9: roof
- 10: front region
- 11: headlights
- 12: grid
- 13: outer shell (upper)
- 14: forward edge
- 15: lower shell
- 16: sealing strip
- 17: cutout
- 18: air duct
- 19: screw
- 20: flange
- 21: inlet opening
- 22: plate
- 23: seat
- 24: roof liner
- 25: pivoting axis
- 26: space
- 27: crevice
- 28: cushion layer
- 29: magnet

## Claims

1. An agricultural vehicle (1) having a driver cabin (2), means for supplying fresh air to the driver cabin (2), and an exhaust air path (27, 26, 18) from the driver cabin (2) into the open, the exhaust air path (27, 26, 18) comprising a check valve (22, 23) for preventing air flow from the open into the cabin, which check valve (22, 23) has a rigid plate (22) for closing member, **characterized in that** the exhaust air path (27, 26, 18) extends in a roof (9) of the cabin (2), and an outlet (17) of the exhaust air path (27, 26, 18) is formed in the bottom side (15) of a projecting portion (10) of the roof (9), and **in that** the plate (22) is displaceable from a seat (23) of the check valve (22, 23) in a substantially upward direction.

2. The agricultural vehicle of claim 1, wherein a force urging the plate (22) against its seat (23) is at least 4 mN and/or at most 10 mN per cm² of active plate surface.

3. The agricultural vehicle of claim 1 or 2, wherein the plate (22) is urged against its seat (23) exclusively by its own weight.

4. The agricultural vehicle of claim 1 or 2, comprising a magnet (29) for urging the plate (22) against its seat (23).

5. The agricultural vehicle of any of the preceding claims, wherein said projecting portion (10) shades a windshield (3) of the driver cabin (2).

6. The agricultural vehicle of any of the preceding claims, wherein a downstream portion (18) of the exhaust air path (27, 26, 18) comprising the check valve (22, 23) is accessible for removal from outside the cabin (2).

7. The agricultural vehicle of claim 6, wherein the check valve (22, 23) forms an inlet opening (21) of said downstream portion (18).

8. The agricultural vehicle of claim 6 or 7, wherein the plate (22) of the check valve (22, 23) is pivotably mounted, and a pivoting axis (25) of the plate (22) and an outlet opening (17) are provided at opposite ends of said downstream portion (18).

## Patentansprüche

1. Landwirtschaftliches Fahrzeug (1) mit einer Fahrerkabine (2) mit Lüftungsmitteln zum Zuführen von Frischluft zur Fahrerkabine (2) und einem Abluftweg (27, 26, 18) von der Fahrerkabine (2) ins Freie, wobei der Abluftweg (27, 26, 18) ein Klappenventil (22, 23) zum Verhindern eines Luftflusses vom Freien in die Kabine umfasst, wobei das Klappenventil (22, 23) als Schließelement eine steife Platte (22) nutzt, **dadurch gekennzeichnet, dass** der Abluftweg (27, 26, 18) sich in einem Dach (9) der Kabine (2) erstreckt, dass ein Auslass (17) des Abluftweges (27, 26, 18) an der Unterseite (15) eines vorspringenden Abschnitts (10) des Dachs (9) gebildet ist, und dass die Platte (22) von einem Sitz (23) des Klappenventils (22, 23) im Wesentlichen aufwärts bewegbar ist.

2. Landwirtschaftliches Fahrzeug nach Anspruch 1, bei dem eine Kraft, die die Platte (22) gegen ihren Sitz (23) drückt, mindestens 4 mN und/oder höchstens 10 mN pro cm² aktiver Plattenoberfläche beträgt.

3. Landwirtschaftliches Fahrzeug nach Anspruch 1 oder 2, bei der die Platte ausschließlich durch ihr eigenes Gewicht gegen den Sitz (23) gedrückt ist.

4. Landwirtschaftliches Fahrzeug nach Anspruch 1 oder 2, mit einem Magneten (29) zum Drücken der Platte (22) gegen ihren Sitz (23).

5. Landwirtschaftliches Fahrzeug nach einem der vorhergehenden Ansprüche, bei dem der vorspringende Abschnitt (10) eine Windschutzscheibe (3) der Fahrerkabine (2) beschattet.

6. Landwirtschaftliches Fahrzeug nach einem der vorhergehenden Ansprüche, bei dem ein stromabwärtiger Abschnitt (18) des Abluftweges (27, 26, 18), der das Klappenventil (22, 23) umfasst, zum Entfernen von außerhalb der Kabine (2) her zugänglich ist.

7. Landwirtschaftliches Fahrzeug nach Anspruch 6, bei dem das Klappenventil (22, 23) eine Einlassöffnung (21) des stromabwärtigen Abschnitts (18) bildet.

8. Landwirtschaftliches Fahrzeug nach Anspruch 6 oder 7, bei dem die Platte (22) des Klappenventils (22, 23) schwenkbar montiert ist und eine Schwenkachse (25) der Platte (22) und eine Auslassöffnung (17) an entgegengesetzten Enden des stromabwärtigen Abschnitts (18) vorgesehen sind.

## Revendications

1. Véhicule agricole (1) pourvu d'une cabine de conducteur (2), de moyens pour fournir de l'air frais à la cabine de conducteur (2), et d'un passage d'air d'évacuation (27, 26, 18) depuis la cabine de conducteur (2) jusqu'à l'atmosphère, le passage d'air d'évacuation (27, 26, 18) comportant une soupape d'arrêt (22, 23) pour empêcher un flux d'air provenant de l'atmosphère de se rendre dans la cabine, cette soupape d'arrêt (22, 23) possédant une plaque rigide (22) à titre d'élément de fermeture, **caractérisé en ce que** le passage d'air d'évacuation (27, 26, 18) s'étend dans un toit (9) de la cabine (2), et un orifice de sortie (17) du passage d'air d'évacuation (27, 26, 18) est formé dans le côté inférieur (15) d'une portion en saillie (10) du toit (9), et **en ce que** la plaque (22) est apte à être déplacée à partir d'un siège (23) de la soupape d'arrêt (22, 23) suivant un sens sensiblement ascendant.

2. Véhicule agricole selon la revendication 1, une force qui sollicite la plaque (22) contre son siège (23) étant égale au moins à 4 mN et/ou au plus à 10 mN par cm² de surface de plaque active.

3. Véhicule agricole selon la revendication 1 ou 2, la plaque (22) étant sollicitée contre son siège (23) exclusivement en vertu de son propre poids.

4. Véhicule agricole selon la revendication 1 ou 2, comprenant un aimant (29) pour solliciter la plaque (22) contre son siège (23).

5. Véhicule agricole selon l'une quelconque des revendications précédentes, ladite portion en saillie (10) procurant de l'ombre à un pare-brise (3) de la cabine de conducteur (2).

6. Véhicule agricole selon l'une quelconque des revendications précédentes, une portion aval (18) du passage d'air d'évacuation (27, 26, 18) comportant la soupape d'arrêt (22, 23) étant accessible à des fins de dépose à partir de l'extérieur de la cabine (2).

7. Véhicule agricole selon la revendication 6, la soupape d'arrêt (22, 23) formant une ouverture d'admission (21) de ladite portion aval (18).

8. Véhicule agricole selon la revendication 6 ou 7, la plaque (22) de la soupape d'arrêt (22, 23) étant montée de façon pivotante, alors qu'un axe pivotant (25) de la plaque (22) et une ouverture de sortie(17) sont prévus au niveau d'extrémités opposées de ladite portion aval (18).
